# EUROPÄISCHE PATENTSCHRIFT

(11) **EP 1 255 931 B1**
(45) Veröffentlichungstag und Bekanntmachung des Hinweises auf die Patenterteilung: **29.06.2005**
(21) Anmeldenummer: 00974529.0
(22) Anmeldetag: 14.11.2000
(51) Int. Cl.: F03D 1/02

(54) **WINDENERGIEANLAGE MIT ZWEI HINTEREINANDER ANGEORDNETEN ROTOREN**
WIND POWER INSTALLATION WITH TWO ROTORS IN TANDEM
EOLIENNE DOTEE DE DEUX ROTORS SITUES L'UN DERRIERE L'AUTRE

(30) Priorität: 26.01.2000 DE 10003385
(43) Veröffentlichungstag der Anmeldung: 13.11.2002
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2000/011218
(87) Internationale Veröffentlichungsnummer: WO 2001/055590

(56) Entgegenhaltungen:
- DE-A- 3 117 996
- DE-C- 746 340
- FR-A- 627 371
- GB-A- 758 628
- US-A- 1 804 016
- US-A- 4 039 848
- US-A- 4 065 225
- US-A- 4 345 161

## Beschreibung

Die Erfindung betrifft eine Windenergieantage, insbesondere eine Großwindenergieanlage mit einer Leistung von mehr als zwei MW, vorzugsweise von etwa fünf MW oder mehr.

Für eine solche Großwindenergieanlage wird erfindungsgemäß ein Rotorkonzept sowie die Ausbildung entsprechender Rotorblätter vorgeschlagen, damit der sichere Betrieb einer solchen Windenergieanlage möglich ist.

Hierzu sei darauf hingewiesen, dass es bereits Stand der Technik ist DE-C-746 340 oder (Erich Hau, "Windkraftanlagen", 1996, 2. Auflage, Seite 113 ff) ein Rotorblatt, welches auf einen maximalen Wirkungsgrad optmiert wird, im Innenbereich mit sehr großen Blatttiefen auszustatten. Solche Rotorblätter sind beispielsweise von der Firma Enercon bei den Windenergieanlage vom Typ E-40 (Leistungsbereich liegt bei 500 bis 600 KW) im Einsatz. Der Innenbereich eines Rotorblattes ist dabei derjenige Teil, welcher nahe an der Nabe (Rotorblattwurzel) liegt und mithin über einen kleinen Radius verfügt.

Während ein solches auf maximalen Wirkungsgrad optimiertes Rotorblatt für kleinere Anlagen gut zu fertigen ist und auch problemlos transportiert werden kann, hat eine solches Rotorblattkonzept zwei Nachteile. Erstens erzeugt die sehr große Fläche des Rotorblattes an der Rotorblattwurzel bei hohen Windgeschwindigkeiten sehr hohe Lasten. Regelmäßig ist dann bereits die Windenergieanlage abgeschaltet. Für diese sehr hohen Lasten muss aber die gesamte Windenergieanlage ausgelegt (dimensioniert) werden. Der zweite Nachteil besteht in der Fertigung eines Rotorblatts mit sehr großer Blatttiefe. Während dieser Nachteil bei Rotorblättern mit einem kleineren Radius noch kaum ins Gewicht fällt, ist die Fertigung und der anschließende Transport eines solchen Rotorblattes, welches über eine sehr große Länge verfügt (z.B. mehr als 50 m), sehr kompliziert und teilweise unmöglich und die sehr große Blatttiefe bringt einen extrem großen Material- und Arbeitsmehraufwand mit sich.

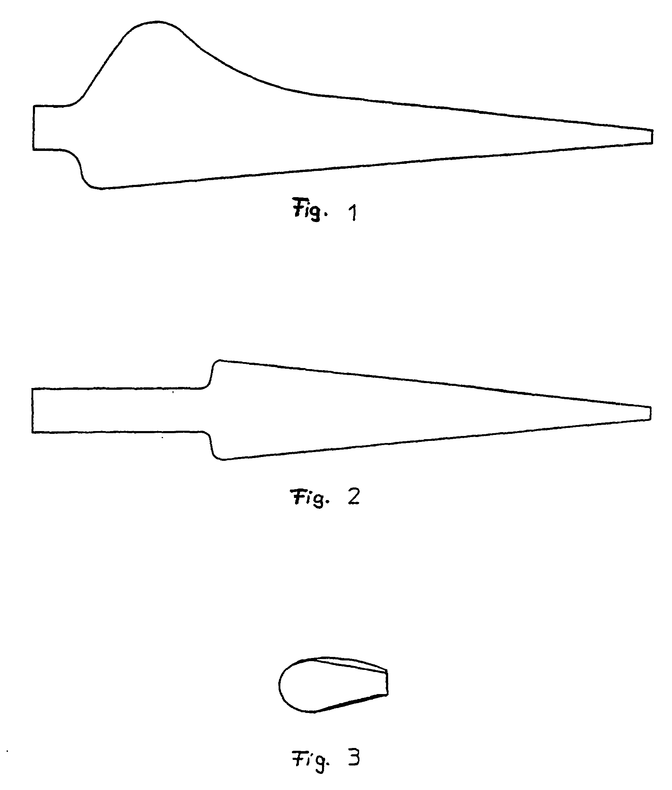

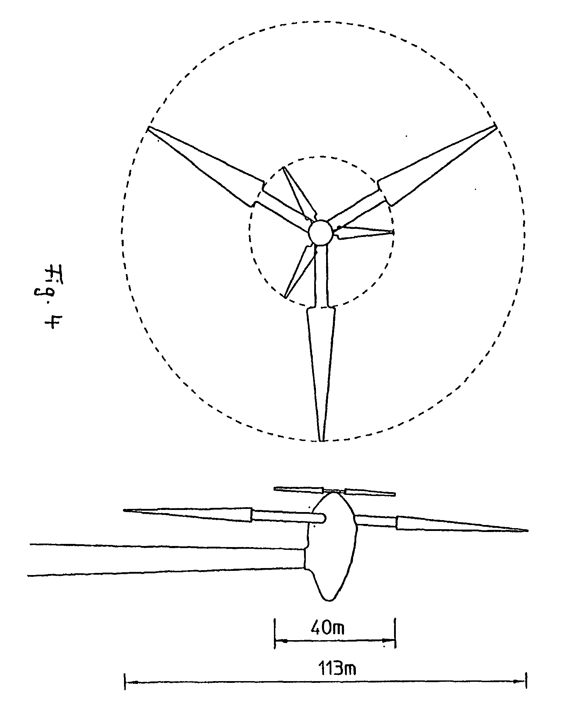

Aus diesen Gründen wurde vorgeschlagen, die großen Blatttiefen zu umgehen. Fig. 2 zeigt eine Ausführung, die früher häufig in Dänemark gebaut wurde.

Bei diesem Ausführungsbeispiel eines Rotorblattes wurde komplett auf den Innenbereich verzichtet. Da die Erntefläche der überstrichenen Rotorfläche entspricht, wurde angenommen, man könne auf diese sehr kleine Fläche (Innenbereichsfläche), die nur ca. 5 % der gesamten Fläche entspricht, verzichten oder den Rotordurchmesser geringfügig vergrößern, um somit den Flächenfluß auszugleichen.

Hierbei wurde jedoch übersehen bzw. nicht darauf geachtet, dass damit im Nahbereich der Windenergieanlage mit Rotorblättern nach Fig. 2 ein aerodynamisches Loch entsteht. Der Wind kann im Nahbereich ungehindert durch dieses Loch hindurchströmen, ohne einen Widerstand zu erfahren. Das führt dazu, dass sich im Innenbereich (ersten Bereich des Rotors der Windenergieantage) des beginnenden Profils am Rotorblatt keine laminare Strömung aufbaut. Damit kann auch der erste Bereich des Rotorblattes mit (aktiver) Rotorprofilierung nicht zum Energieertrag beitragen.

Von der Firma Enercon wurde bereits sehr frühzeitig (ca. 1990) dicke, abgeschnittene Profile entwickelt, um die vorgenannten Probleme zu umgehen.

Fig. 3 zeigt ein solches Profil, welches im inneren Bereich des Rotorblattes verwendet wurde. Selbst die abgeschnittenen Profile führen bei großen Windenergieanlagen (Rotordurchmesser über 70 m) jedoch zu Blatttiefen von bis zu 6 m, was den Transport solcher Rotorblätter extrem schwierig und ihre Fertigung äußerst aufwendig macht.

Aufgabe der Erfindung ist es, die vorgenannten Probleme zu beseitigen und die Fertigung einer Windenergieanlage sowie deren Betrieb zu vereinfachen.

Die Erfindung löst die Aufgabe mit den Merkmalen einer Windenergieanlage nach Anspruch 1. Vorteilhafte Weiterbildungen sind in den Unteransprüchen beschrieben.

Das erfindungsgemäße Konzept der Windenergieanlage sieht vor, die Windenergieanlage mit zwei Rotoren auszustatten, von denen der erste, der kleine Rotor vor dem zweiten, dem größeren Rotor, angeordnet ist. Mithin wird erfindungsgemäß vorgeschlagen, den Innenbereich des Rotors einer Windenergieanlage vom Außenbereich völlig zu trennen.

Eine solche Windenergieanlage wird anhand der nachfolgenden Figuren beispielhaft beschrieben. Als Beschreibungsmodell dient hierbei eine Großwindenergieanlage mit einem Durchmesser von etwa 113 m und einer installierten Generatorleistung von etwa 5 MW. Der Rotor für den inneren Bereich hat dabei einen Durchmesser von etwa 40 m.

Damit verbleiben für den zweiten Rotor, den größeren Rotor, noch eine aktive Rotorblattlänge von etwa 36,5 m. Der erste, kleine Rotor dreht mit einen Nenndrehzahl von etwa 38 U/min. Der zweite, große Rotor dreht mit einer Nenndrehzahl von 11 U/min. Damit sind die Umfangsgeschwindigkeiten der Rotorblattspitzen beider Rotoren nahezu gleich.

Der Vorteil der erfindunsgemäßen Windenergieanlage liegt darin, dass sich für den Innenbereich des Rotors nur noch eine sehr kleine Angriffsfläche bei hohen Windgeschwindigkeiten einstellt. Damit ergeben sich sehr viel geringere Extremlasten der gesamten Windenergieanlage.

Ein weiterer Vorteil besteht darin, dass das Rotorblatt für den Außenbereich (der zweite Rotor) als eine Einheit mit einer Länge von etwa 36,5 m gefertigt werden kann. Eine solche Einheit kann auf einen Rotorblattstumpf aufgesetzt werden, welcher aerodynamisch keinen relevanten Betrag zum Antrieb des Rotors mehr leistet. Damit ist der Transport der Rotorblätter ohne weiteres möglich.

Ein weiterer Vorteil besteht auch darin, dass die Rotorblattverstellvorrichtung des zweiten Rotors nicht mehr so groß ausgelegt werden muss, da die Rotorblattverstellvorrichtung auf den Rotorblattstumpf aufgesetzt (gelagert) werden kann und mithin etwa 20 m(Radius des kleinen Rotors) von der Nabe entfernt liegt.

Jeder Rotor treibt im Betrieb der Windenergieanlage einen eigenen Generator an. Der Generator des ersten Rotors liegt zwischen dem ersten und dem zweiten Rotor und wird vorzugsweise direkt von diesem angetrieben. Für die Konstruktion der erfindungsgemäßen Windenergieanlage bedeutet dieses, dass vor den zweiten Rotor eine Rotor-Generator-Anordnung kleineren Typs, z.B. vom Typ E-40 der Firma Enercon, gesetzt wird. Beide Rotoren sowie beide Generatoren werden dabei von einem einzigen Achszapfen aufgenommen und sind drehbar auf diesem gelagert.

Vorzugsweise drehen beide Rotoren in die gleiche Richtung (rechtsdrehend), es ist aber auch möglich, die Rotoren bei entsprechender Auslegung der Rotorblätter gegensinnig drehen zu lassen.

Der Turm der erfindungsgemäßen Windenergieanlage hat eine Höhe von mehr als 100 m, beispielsweise liegt die Nabenhöhe im Bereich von 120 bis 160 m.

Im Betrieb der Windenergieanlage sorgt der kleinere Rotor (der erste Rotor) dafür, dass sich im Innenbereich des zweiten Rotors kein aerodynamisches Loch ausbilden kann.

## Patentansprüche

1. Windenergieanlangen mit wenigstens zwei hintereinander angeordneten Rotoren, von den der erste Rotor, der vor dem zweiten Rotor angeordnet ist, einen kleineren Durchmesser aufweist als der zweite Rotor
**dadurch gekennzeichnet, dass** die Nenndrehzahl des ersten Rotors deutlich höher ist als die Nenndrehzahl des zweiten Rotors und die Umfangsgeschwindigkeit der Rotorblattspitzen beider Rotoren im Nennbetrieb nahezu gleich ist.

2. Windenergieanlage nach Anspruch 1,
**dadurch gekennzeichnet, dass** der erste Rotor mit einer höheren Drehzahl rotiert, als der zweite Rotor.

3. Windenergieanlage nach Anspruch 1 und 2,
**dadurch gekennzeichnet, dass** die Nenndrehzahl des ersten Rotors etwa im Bereich von 25 bis 45 U/min. liegt.

4. Windenergieantage nach Anspruch 1 und 2,
**dadurch gekennzeichnet, dass** die Nenndrehzahl des zweiten Rotors etwa im Bereich von 5 bis 19 U/min. liegt.

5. Windenergieanlage nach einem der vorhergehenden Ansprüche,
**dadurch gekennzeichnet, dass** die Umfangsgeschwindigkeit der Rotorblattspitzen beider Rotoren im Nennbetrieb nahezu gleich, ist.

6. Windenergieanlage nach einem der vorhergehenden Ansprüche,
**dadurch gekennzeichnet, dass** jedem Rotor jeweils ein Generator zugeordnet ist.

7. Windenergieantage nach einem der vorhergehenden Ansprüche,
**dadurch gekennzeichnet, dass** der erste Rotor einen Durchmesser von etwa 35 bis 55 m und der zweite Rotor einen Durchmesser von etwa 100 bis 150 m, vorzugsweise etwa 113 m, aufweist.

8. Windenergieanlage mit einem ersten und einem zweiten Rotor, wobei der zweite Rotor über einen deutlich größeren Durchmesser verfügt, wie der erste Rotor und hinter dem ersten Rotor angeordnet ist und der zweite Rotor Rotorblätter aufweist, deren aktive Blattflächen erst im Bereich der Rotorblattspitzen des ersten Rotors beginnen.

9. Windenergieanlage nach einem der vorhergehenden Ansprüche,
**dadurch gekennzeichnet, dass** der zweite Rotor Rotorblätter aufweist, die aus zwei Teilen bestehen, wobei der zweite, äußere Teil der Rotorblätter das aktive Rotorblatt bildet und der erste Teil des Rotorblattes aerodynamisch so ausgebildet ist, dass er keinen relevanten Beitrag zum Antrieb des Rotors erzeugt.

10. Windenergieantage nach Anspruch 9,
**dadurch gekennzeichnet, dass** für ein Rotorblatt des zweiten Rotors eine Rotorblattstellvorrichtung ausgebildet ist, die zwischen dem ersten und zweiten Rotorblattteil ausgebildet ist.

11. Windenergieanlage nach Anspruch 9 und 10,
**dadurch gekennzeichnet, dass** der erste Rotorblattabschnitt des zweiten Rotors starr an der Nabe des zweiten Rotors befestigt ist.

12. Windenergieanlage mit einer Rotoranordnung, die einen Rotorinnenbereich und einen Rotoraußenbereich aufweist, wobei der Innenbereich des Rotors vom Außenbereich des Rotors getrennt ist.

13. Windenergieantage nach einem der vorhergehenden Ansprüche,
**dadurch gekennzeichnet, dass** zwischen dem ersten Rotor und dem zweiten Rotor ein erster Generator angeordnet ist, dessen Läufer mit dem ersten Rotor verbunden ist und von diesem angetrieben wird.

14. Windenergieanlage nach einem der vorhergehenden Ansprüche,
**dadurch gekennzeichnet, dass** der erste Rotor so nahe vor dem zweiten Rotor angeordnet ist, dass sich in dem Bereich des zweiten Rotors kein aerodynamisches Loch ausbilden kann.

15. Windenergieantage nach einem der vorhergehenden Ansprüche,
**dadurch gekennzeichnet, dass** beide Rotoren in der gleichen Richtung drehen (rechtsdrehend).

## Claims

1. A wind power installation having at least two rotors arranged one behind the other, of which the first rotor, which is arranged in front of the second rotor, has a smaller diameter than the second rotor, **characterised in that** the rated speed of rotation of the first rotor is significantly higher than the rated speed of rotation of the second rotor and the peripheral speed of the rotor blade tips of both rotors is approximately the same in operation at normal rating.

2. A wind power installation according to Claim 1, **characterised in that** the first rotor rotates at a higher speed than the second rotor.

3. A wind power installation according to Claim 1 and 2, **characterised in that** the rated speed of rotation of the first rotor is approximately in the range between 25 and 45 rpm.

4. A wind power installation according to Claim 1 and 2, **characterised in that** the rated speed of rotation of the second rotor is approximately in the range between 5 and 19 rpm.

5. A wind power installation according to one of the preceding claims, **characterised in that** the peripheral speed of the rotor blade tips of both rotors is approximately the same in operation at normal rating.

6. A wind power installation according to one of the preceding claims, **characterised in that** a respective generator is associated with each rotor.

7. A wind power installation according to one of the preceding claims, **characterised in that** the first rotor has a diameter of approximately 35 to 55 m and the second rotor has a diameter of approximately 100 to 150 m, preferably approximately 113 m.

8. A wind power installation having a first and a second rotor, the second rotor having a significantly larger diameter than the first rotor and being arranged behind the first rotor, and the second rotor having rotor blades whereof the active blade faces begin only in the region of the rotor blade tips of the first rotor.

9. A wind power installation according to one of the preceding claims, **characterised in that** the second rotor has rotor blades comprising two parts, the second, outer part of the rotor blades forming the active rotor blade and the first part of the rotor blade being of an aerodynamic construction such that it makes no relevant contribution to driving the rotor.

10. A wind power installation according to Claim 9, **characterised in that** a rotor blade servo device is constructed for a rotor blade of the second rotor and is constructed between the first and the second rotor blade parts.

11. A wind power installation according to Claim 9 and 10, **characterised in that** the first rotor blade portion of the second rotor is rigidly secured to the hub of the second rotor.

12. A wind power installation having a rotor arrangement which has a rotor inner region and a rotor outer region, the inner region of the rotor being separated from the outer region of the rotor.

13. A wind power installation according to one of the preceding claims, **characterised in that** a first generator is arranged between the first rotor and the second rotor and the armature thereof is connected to the first rotor and driven thereby.

14. A wind power installation according to one of the preceding claims, **characterised in that** the first rotor is arranged so closely in front of the second rotor that it is not possible for an aerodynamic gap to be formed in the region of the second rotor.

15. A wind power installation according to one of the preceding claims, **characterised in that** both rotors turn in the same direction (clockwise).

## Revendications

1. Eolienne dotée d'au moins deux rotors disposés l'un derrière l'autre, dont le premier rotor, qui est disposé devant le second rotor, présente un diamètre inférieur au second rotor, **caractérisée en ce que** la vitesse de rotation nominale du premier rotor est nettement supérieure à la vitesse de rotation nominale du second rotor et la vitesse circonférentielle des extrémités de pale de rotor des deux rotors est à peu près égale en régime nominal.

2. Eolienne selon la revendication 1, **caractérisée en ce que** le premier rotor tourne avec une vitesse de rotation supérieure au second rotor.

3. Eolienne selon les revendications 1 et 2, **caractérisée en ce que** la vitesse de rotation nominale du premier rotor se trouve à peu près dans la gamme comprise entre 25 et 45 tr/min.

4. Eolienne selon les revendications 1 et 2, **caractérisée en ce que** la vitesse de rotation nominale du second rotor se trouve à peu près dans la gamme comprise entre 5 et 19 tr/min.

5. Eolienne selon l'une quelconque des revendications précédentes, **caractérisée en ce que** la vitesse circonférentielle des extrémités de pale de rotor des deux rotors est à peu près égale en régime nominal.

6. Eolienne selon l'une quelconque des revendications précédentes, **caractérisée en ce qu'**un générateur à chaque fois est affecté à chaque rotor.

7. Eolienne selon l'une quelconque des revendications précédentes, **caractérisée en ce que** le premier rotor présente un diamètre compris entre environ 35 et 55 m et le second rotor présente un diamètre compris entre environ 100 et 150 m, s'élevant de préférence à peu près à 113 m.

8. Eolienne dotée d'un premier et d'un second rotor, le second rotor disposant d'un diamètre nettement supérieur au premier rotor et étant disposé derrière le premier rotor et le second rotor présentant des pales de rotor dont les surfaces de pale actives commencent uniquement dans la zone des extrémités de pale de rotor du premier rotor.

9. Eolienne selon l'une quelconque des revendications précédentes, **caractérisée en ce que** le second rotor présente des pales de rotor qui se composent de deux parties, la seconde partie extérieure des pales de rotor formant la pale de rotor active et la première partie de la pale de rotor étant réalisée aérodynamique de manière à ce qu'elle ne génère aucune contribution significative à l'entraînement du rotor.

10. Eolienne selon la revendication 9, **caractérisée en ce qu'**un dispositif de réglage de pale de rotor est réalisé pour une pale de rotor du second rotor, ledit dispositif de réglage de pale de rotor étant réalisé entre la première et la seconde partie de pale de rotor.

11. Eolienne selon les revendications 9 et 10, **caractérisée en ce que** la première section de pale de rotor du second rotor est montée de manière rigide sur le moyeu du second rotor.

12. Eolienne avec un agencement de rotor qui présente une zone intérieure de rotor et une zone extérieure de rotor, la zone intérieure du rotor étant séparée de la zone extérieure du rotor.

13. Eolienne selon l'une quelconque des revendications précédentes, **caractérisée en ce qu'**un premier générateur est disposé entre le premier rotor et le second rotor, l'induit dudit premier générateur étant relié au premier rotor et entraîné par ce dernier.

14. Eolienne selon l'une quelconque des revendications précédentes, **caractérisée en ce que** le premier rotor est disposé proche devant le second rotor de manière à ce qu'aucun vide aérodynamique ne puisse se former dans la zone du second rotor.

15. Eolienne selon l'une quelconque des revendications précédentes, **caractérisée en ce que** les deux rotors tournent dans le même sens (tournant dans le sens dextrogyre).
